(19) Europäisches Patentamt
European Patent Office
Office européen des brevets

(11) Veröffentlichungsnummer: **0 288 824 B1**

(12) **EUROPÄISCHE PATENTSCHRIFT**

(45) Veröffentlichungstag der Patentschrift: **25.08.93**

(51) Int. Cl.5: **C07C 309/73**, C08G 18/32

(21) Anmeldenummer: **88105930.7**

(22) Anmeldetag: **14.04.88**

# (54) Sulfonsäurearylesterhaltige aromatische Diamine, ein Verfahren zu ihrer Herstellung sowie ihre Verwendung bei der Herstellung von Polyurethankunststoffen.

(30) Priorität: **25.04.87 DE 3713856**

(43) Veröffentlichungstag der Anmeldung:
**02.11.88 Patentblatt 88/44**

(45) Bekanntmachung des Hinweises auf die Patenterteilung:
**25.08.93 Patentblatt 93/34**

(84) Benannte Vertragsstaaten:
**BE DE FR GB IT NL SE**

(56) Entgegenhaltungen:
**EP-A- 0 003 102**
**DE-A- 2 720 166**
**DE-C- 923 367**

(73) Patentinhaber: **BAYER AG**

**D-51368 Leverkusen(DE)**

(72) Erfinder: **Sanders, Josef, Dr.**
**Wolfskaul 6**
**D-5000 Köln 80(DE)**
Erfinder: **Reiff, Helmut, Dr.**
**Paul-Klee-Strasse 68i**
**D-5090 Leverkusen 1(DE)**
Erfinder: **Ballé, Gerhard, Dr.**
**Nietzschestrasse 14**
**D-5090 Leverkusen 1(DE)**
Erfinder: **Dieterich, Dieter, Dr.**
**Henry-Theodor-von Böttinger-Strasse 16**
**D-5090 Leverkusen 1(DE)**

**EP 0 288 824 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue sulfonsäurearylesterhaltige aromatische Diamine der allgemeinen Formel

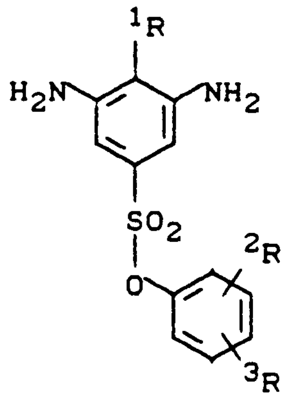

,

in der

$^1R$ ein Wasserstoffatom, einen gegebenenfalls verzweigten Alkylrest mit 1 bis 6 C-Atomen, vorzugsweise eine Methylgruppe, einen Alkoxyrest mit 1 bis 6 C-Atomen oder ein Halogenatom, verzugsweise Chlor und

$^2R$ und $^3R$ gleich oder verschieden sind, Wasserstoffatome, gegebenenfalls verzweigte Alkylreste mit 1 bis 20, vorzugsweise 1 bis 6 C-Atomen, Alkoxyreste mit 1 bis 6 C-Atomen oder ein Halogenatom, vorzugsweise Chlor, bedeuten.

Gegenstand der vorliegenden Erfindung ist auch ein Verfahren zur Herstellung von sulfonsäurearylesterhaltigen aromatischen Diaminen der allgemeinen Formel

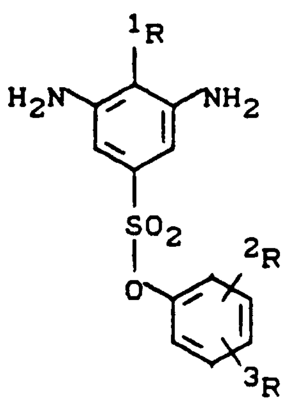

,

in der

$^1R$, $^2R$ und $^3R$ die vorgenannte Bedeutung haben durch

a) Umsetzung von

(i) Sulfochloriden der allgemeinen Formel

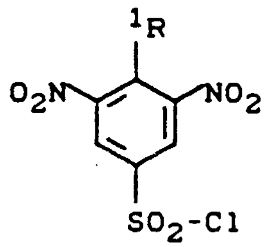

(i),

in der
$^1R$ die vorgenannte Bedeutung hat, mit
(ii) Phenolen der allgemeinen Formel

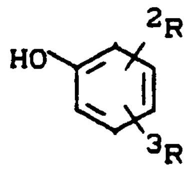

(ii),

in der
$^2R$ und $^3R$ die vorgenannte Bedeutung haben,
in Gegenwart von alkalisch reagierenden Verbindungen zu den entsprechenden Dinitrosulfonsäureestern der allgemeinen Formel

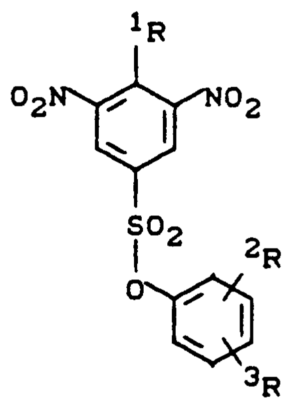

,

in der
$^1R$, $^2R$ und $^3R$ die vorgenannte Bedeutung haben und
b) an sich bekannte Hydrierung der zuletzt genannten Dinitrosulfonsäureester zu den entsprechenden Diaminsulfonsäureestern.

Gegenstand der Erfindung ist schließlich auch die Verwendung der letztgenannten sulfonsäurearylesterhaltigen aromatischen Diamine als Aufbaukomponente bei der Herstellung von Polyurethankunststoffen nach dem Isocyanat-Polyadditionsverfahren.

Ausgangsmaterialien für das erfindungsgemäße Verfahren sind
(i) gegebenenfalls substituierte Dinitrosulfochloride und
(ii) gegebenenfalls mono- bzw. disubstituierte Phenole.

Geeignete Dinitrosulfochloride (i) sind z.B. 3,5-Dinitrobenzolsulfonylchlorid, 3,5-Dinitro-4-methoxybenzolsulfonylchlorid, 3,5-Dinitro-4-ethylbenzoesulfonylchlorid, vorzugsweise 3,5-Dinitro-4-methylbenzolsulfonylchlorid (2,6-Dinitrotoluol-4-sulfonylchlorid) und 3,5-Dinitro-4-chlorbenzolsulfonylchlorid. Diese Ausgangsverbindungen sind in an sich bekannter Weise durch Chlorierung der entsprechenden Benzolsulfonsäurealkalisalze zugänglich.

Weitere Ausgangsprodukte (ii) für das erfindungsgemäße Verfahren sind gegebenenfalls mono- bzw. disubstituierte Phenole. Beispielsweise kommen in Betracht:
Phenol, 2-Chlorphenol, 3-Chlorphenol, 4-Chlorphenol, 2,4-Dichlorphenol, 2,5-Dichlorphenol, 2,6-Dichlorphenol, 2-Methylphenol, 2-Chlor-6-methylphenol, 5-Chlor-2-methylphenol, 4-Chlor-2-methylphenol, 3-Chlor-2-methylphenol, 3-Methylphenol, 2-Chlor-5-methylphenol, 4-Chlor-3-methylphenol, 4-Methylphenol, 2-Ethylphenol, 3-Ethylphenol, 4-Ethylphenol, 2,3-Dimethylphenol, 3,4-Dimethylphenol, 2,6-Dimethylphenol, 2,4-Dimethylphenol, 3,5-Dimethylphenol, 2,5-Dimethylphenol, 2-Isopropylphenol, 4-Isopropylphenol, 2,4-Diisopropylphenol, 3-Ethyl-5-methylphenol, 2-sek. Butylphenol, 4-sek.-Butylphenol, 2-tert.-Butylphenol, 4-tert.-Butylphenol, 3-Isopropyl-5-methylphenol, 2-Isopropyl-5-methylphenol, 4-tert.-Pentylphenol, 2-tert.-Butyl-4-methylphenol, 2,6-Diisopropylphenol, 4-(1,1,3,3-Tetramethylbutyl)-phenol, 2,6-Di-tert.-butylphenol, 2-Nonylphenol, 4-Nonylphenol, 2,4-Di-tert.-phenylphenol, 2-Dodecylphenol, 4-Dodecylphenol, 4-Methoxymethylphenol, 3-Methoxyphenol, 2-Methoxyphenol, 2-Ethoxyphenyl, 3-Ethoxyphenol, 4-Ethoxyphenol, 2-Isopropoxyphenyl, 3-Isopropoxyphenol, 4-Isopropoxyphenol. Bevorzugt werden Phenol, 2-Methylphenol, 3-Methylphenol, 4-Methylphenol, 2-Ethylphenol, 4-Ethylphenol.

Als alkalisch reagierende Verbindung, die zur Umsetzung der Sulfochloride (i) mit den Phenolen (ii) erforderlich sind, kommen z.B. Metallcarbonate oder Metallhydroxide aber auch tert. Amine wie z.B. Pyridin oder Triethylamin in Betracht. Bevorzugt werden Alkalicarbonate oder Alkalihydroxide, z.B. Kaliumcarbonat oder Natriumhydroxid.

Bei der Durchführung der Stufe a) des erfindungsgemäßen Verfahrens können die Ausgangsmaterialien (ii) in bezogen auf die Komponente (i) sowohl in stöchiometrischer Menge als auch im Über- oder Unterschuß zum Einsatz gelangen. Vorzugsweise wird die Komponente (ii) so bemessen, daß auf jedes Mol an Sulfonsäurechloridgruppen der Komponente (i) 1 bis 1,2 Mol der Komponente (ii) vorliegt. Der bei der Reaktion freiwerdende Chlorwasserstoff kann, wie schon erwähnt, durch Zusatz von Metallcarbonaten, Metallhydroxiden oder tert. Aminen gebunden werden. Dabei wird ihre Menge zumindest so bemessen, daß sie zur Neutralisation des abgespaltenen Chlorwasserstoffs ausreicht. Besonders bevorzugt werden sie in einer Menge verwendet, daß 1 bis 3 Mol Basenäquivalente pro Mol Sulfonylgruppen zur Verfügung stehen.

Die Stufe a) des erfindungsgemäßen Verfahrens wird zweckmäßig in Wasser und/oder organischen Lösungsmitteln, gegebenenfalls in Gegenwart eines Phasentransferkatalysators durchgeführt. Dabei können die Reaktionspartner in homogener Phase oder zweiphasig, gelöst, emulgiert oder suspendiert vorliegen.

Geeignete organische Lösungsmittel sind beispielsweise: Benzol, Toluol, Xylol, Chlorbenzol, Nitrobenzol, Dichlorbenzol, Diethylether, Diisopropylether, Tetrahydrofuran, Dioxan, Ethylenglykoldimethylether, Ethylenglykoldiethylether, Methanol, Ethanol, i-Propanol, Essigester, Aceton, Methylethylketon, Acetonitril, Dimethylformamid, Dimethylacetamid, Dimethylsulfoxid, Tetramethylensulfon, Furfurol, Nitromethan, Nitropropan, N-Methylpyrrolidon, Hexamethylenphosphorsäuretriamid, Tetramethylharnstoff, Trimethylharnstoff, Methylenchlorid, Chloroform, Trichlorethylen, Tetrachlorethylen oder beliebige Gemische derartiger Lösungsmittel.

Bevorzugte Lösungsmittel sind Aceton, Methylethylketon, Methylenchlorid, Chlorbenzol sowie Toluol gegebenenfalls in Abmischung mit Wasser. Die Menge des Lösungsmittels wird hierbei im allgemeinen so bemessen, daß sie ausreicht, um die Ausgangsmaterialien (i) und (ii) klar zu lösen. In der Praxis bedeutet dies, daß die Lösungsmittel im allgemeinen in einer Menge von 100 bis 1000, bevorzugt 200 - 800 Gew.-Teilen Lösungsmittel pro 100 Gew.-Teilen des Gemisches aus den Komponenten (i) und (ii) zum Einsatz gelangen.

Es kann in manchen Fällen vorteilhaft sein, die Umsetzung in Gegenwart eines Phasentransferkatalysators durchzuführen. Diese Arbeitsweise wird bevorzugt, wenn Wasser und ein gegebenenfalls zusätzlich mit Wasser nicht mischbares organisches Lösungsmittel wie z.B. Methylenchlorid, Chlorbenzol oder Toluol als Lösungsmittel verwendet werden.

Als Phasentransferkatalysatoren kommen Verbindungen in Betracht, wie sie beispielsweise in E.V. und S.S. Dehmlow, Phase Transfer Catalysis, 2. Auflage, Verlag Chemie, Weinheim 1983, beschrieben sind.

Geeignete Katalysatoren sind quarternäre Ammonium- oder Phosphoniumsalze der Formel

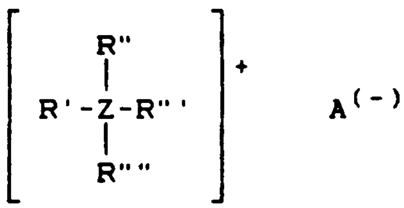

in welcher

Z für Stickstoff oder Phosphor steht,

$R'$, $R''$, $R'''$ und $R''''$ für gleiche oder verschiedene Reste stehen und Alkylgruppen mit 1 bis 18 Kohlenstoffatomen bedeuten, wobei einer der Reste auch für einen araliphatischen Rest mit 7 bis 15 Kohlenstoffatomen stehen kann, und wobei die Summe der Kohlenstoffatome der vier Reste vorzugsweise bei 12 bis 31 liegt.

$A^{(-)}$ Anion.

Typische Beispiele geeigneter Katalysatoren sind N-Benzyl-N,N,N-triethyl-ammoniumchlorid oder -bromid, N-Benzyl-N-dodecyl-N,N-dimethyl-ammoniumchlorid oder -bromid, N,N,N,N-Tetra-n-hexyl-ammoniumchlorid oder -bromid, N-Benzyl-N,N,N-tri-n-octyl-ammoniumchlorid oder -bromid oder die diesen Ammoniumsalzen entsprechenden Phosphoniumsalze.

Die beispielhaft genannten quarternären Ammonium- oder Phosphoniumsalze werden bei der Durchführung des erfindungsgemäßen Verfahrens vorzugsweise in Substanz oder in Form ihrer wäßrigen Lösungen (beispielsweise mit einem Feststoffgehalt von 30 bis 60 Gew.-%) und vorzugsweise in einer Menge von 1 bis 10 Mol-%, bezogen auf die Molzahl der vorhandenen Sulfonylgruppen, eingesetzt.

Die Stufe a) des erfindungsgemäßen Verfahrens wird im allgemeinen bei -20 bis 100 °C, bevorzugt bei 20 bis 60 °C, mit Überdruck, Unterdruck oder zweckmäßig drucklos, kontinuierlich oder diskontinuierlich durchgeführt.

Die Verweilzeit beträgt im allgemeinen 0,5 bis 24 Stunden; bevorzugt werden 0,5 bis 5 Stunden.

Zur Durchführung der Stufe a) des erfindungsgemäßen Verfahrens kann man beispielsweise so vorgehen, daß man die Ausgangsmaterialien (i) und (ii) und gegebenenfalls den Phasentransferkatalysator im gewählten Lösungsmittel vorlegt und die Base in flüssiger oder in gelöster Form, unter Rühren, gegebenenfalls unter Kühlung, portionsweise oder kontinuierlich zugibt. Anschließend rührt man bei Raumtemperatur oder gegebenenfalls erhöhter Temperatur so lange nach, bis die dünnschichtchromatographische oder gaschromatographische Analyse vollständigen Umsatz anzeigt. Die Umsetzung kann aber auch durch gleichzeitiges Vermischen der gegebenenfalls gelösten Reaktionskomponenten vorgenommen werden. Eine andere Möglichkeit der Reaktionsführung besteht, z.B. darin, die Phenolkomponente (ii) vorzulegen, dann die Base und anschließend die Sulfonylkomponente (i) zuzugeben.

Die Aufarbeitung kann nach an sich bekannten Verfahren erfolgen. Bei Verwendung von mit Wasser mischbaren Lösungsmittel kann man im Fall fester, in Wasser unlöslicher Reaktionsprodukte das Reaktionsgemisch in Wasser einrühren und das ausgefallene Reaktionsprodukt in üblicher Weise durch Absaugen isolieren. Im Fall öliger Reaktionsprodukte ist dagegen eine extraktive Aufarbeitung nach üblichen Methoden zweckmäßig. Die Rohprodukte können, falls erforderlich, in üblicher Weise, z.B. durch Umkristallisation oder Destillation, gereinigt werden.

Die in Stufe a) des erfindungsgemäßen Verfahrens erhaltenen Dinitrosulfonsäurearylester werden in der Stufe b) in an sich bekannter Weise durch Reduktion mit nascierendem oder karalytisch, beispielsweise mittels Raney-Nickel oder Palladium auf Kohle angeregtem Wasserstoff in die entsprechenden Diamine überführt. Die Hydrierung erfolgt im allgemeinen in Gegenwart eines inerten Lösungsmittels bei 20 bis 120 °C und einem Druck von 20 bis 80 bar. Geeignete Lösungsmittel sind beispielsweise Methanol, Ethanol, i-Propanol, tert.-Butanol, Toluol, DMF, Essigester usw.. Bevorzugt wird Methanol. Die Diamine werden als Destillationsrückstand bei der destillativen Entfernung des Lösungsmittels gewonnen und können falls erforderlich, in üblicher Wiese z.B. durch Umkristallisation oder Destillation gereinigt werden.

Die nach dem beschriebenen Verfahren zugänglichen neuen Diamine sind in der Regel gut kristallisiert und können z.B. als Ausgangsmaterial zur Herstellung von Farbstoffen (Polyurethane, Polyamide, Epoxide u.ä.) dienen. Als besonders wertvoll erwiesen sich die Verbindungen als Kettenverlängerungsmittel bei der Herstellung von Kunststoffen mit kautschukelastischen Eigenschaften. Mit Hilfe derartiger Kettenverlängerer

hergestellte Elastomere weisen hervorragende mechanische Eigenschaften (Weichheit und trotzdem große Weiterreißfestigkeit) auf. Darüber hinaus sind die erfindungsgemäßen Diamine wegen der Sulfonestergruppe auch physiologisch unbedenklich, da sie im Körper leicht zu den entsprechenden Sulfonsäuren abgebaut werden können. Beispielsweise erwies sich 2,6-Diaminotoluol-4-sulfonsäurephenylester im Test als Ames-negativ.

Bei der Verwendung dieser erfindungsgemäßen Diamine zur Herstellung von Polyurethankunststoffen, insbesondere von massiven oder zellförmigen Polyurethanelastomeren werden die erfindungsgemäßen Diamine anstelle der bislang für diesen Verwendungszweck eingesetzten Diamine mit den bekannten Reaktionspartnern zur Umsetzung gebracht. (Vgl. diesbezüglich "Kunststoff-Handbuch", Band VII, "Polyurethane" von Vieweg und Höchtlen, Carl Hanser-Verlag München (1966), insbesondere Seiten 206 - 297 oder EP 0 037 029). So erfolgt beispielsweise die Herstellung von Polyurethanelastomeren unter Verwendung der erfindungsgemäßen Diamine durch deren Umsetzung mit

A) Polyisocanaten, vorzugsweise Diisocyanaten,

B) Verbindungen mit mindestens zwei gegenüber Isocyanaten reaktiven Wasserstoffatomen und einem Molekulargewicht von 400 bis 10.000, vorzugweise Polyhydroxyverbindungen, sowie gegebenenfalls

C) weiteren, gegenüber Isocyanaten reaktiven Verbindungen mit einem Molekulargewicht von 32 bis 400 als zusätzlichen Kettenverlängerungsmitteln, gegebenenfalls in Gegenwart von

D) Aktivatoren, Treibmitteln und/oder weiteren an sich bekannten Hilfs- und Zusatzmitteln.

Geeignete Vertreter der unter A) bis D) aufgeführten Ausgangskomponenten werden beispielsweise in der EP 0 037 029 genannt.

Die Umsetzung kann nach dem bekannten Prepolymerverfahren durch Umsetzung des Polyisocyanats A) mit der Komponente B) unter Einhaltung eines Äquivalentverhältnisses von Isocyanatgruppen zu gegenüber Isocyanatgruppen reaktionsfähigen Gruppen von größer als 1,3:1 und anschließende Umsetzung des so erhaltenen NCO-Prepolymeren mit den erfindungsgemäßen Diaminen gegebenenfalls unter Mitverwendung von weiteren Komponenten C) und D) oder aber auch einstufig durch Umsetzung des Polyisocyanats A) mit einem Gemisch aus den erfindungsgemäßen Diaminen, der Komponente B) und gegebenenfalls der Komponenten C) und D) erfolgen. Bei beiden Varianten liegt das Äquivalentverhältnis von Isocyanatgruppen zur Gesamtmenge der gegenüber Isocyanatgruppen reaktionsfähigen Gruppen im allgemeinen bei 0,8:1 bis 1,3:1, vorzugsweise 0,95:1 bis 1,1:1. Die Temperaturen, bei welchen diese Umsetzungen durchgeführt werden, liegen im allgemeinen bei 60 bis 180 °C, vorzugsweise bei 80 bis 150 °C. Die Umsetzungen können in Anwesenheit oder in Abwesenheit von geeigneten inerten Lösungsmitteln erfolgen.

Die folgenden Beispiele sollen die Erfindung näher erläutern. Wo nicht anders vermerkt, sind Mengenangaben als Gewichtsteile bzw. Gewichtsprozent zu verstehen.

## Beispiele

### Beispiel 1

a) Herstellung von 2,6-Dinitrotoluol-4-sulfochlorid

Eine Mischung von 757 g (2 Mol) 2,6-Dinitrotoluol-4-sulfonsäurenatriumsalz (ca. 75 %ig), 614 g (4 Mol) Phosphoroxychlorid, 800 ml Acetonitril und 800 ml Tetramethylensulfon wird 4 Stunden unter Rühren auf 70 °C erhitzt. Nach Abkühlen hydrolysiert man durch vorsichtiges Einpumpen in 4 l Eiswasser. Das ausgefallene Produkt wird abgesaugt, mit Wasser neutral gewaschen und im Vakuum bei 50 °C getrocknet.
Ausbeute: 527 g (94 % der Theorie)
Fp.: 126 - 127 ° C (schwach gelbliche Kristalle)

| Elementaranalyse: $C_7H_5ClN_2O_6S$: 280,64 | | | | |
|---|---|---|---|---|
| Ber.: | C: 29,96 % | H: 1,80 % | Cl: 12,63 % | N: 9,98 % |
| Gef.: | C: 29,90 % | H: 1,60 % | Cl: 12,90 % | N: 10,10 % |

b) Herstellung von 2,6-Dinitro-4-sulfonsäurephenylester

Zu einer Lösung von 420 g (1,5 Mol) 2,6-Dinitrotoluol-4-sulfonsäurechlorid (aus Sulfolan-Verfahren) in 150 ml Aceton gibt man portionsweise 148,7 g (1,58 Mol) Phenol und rührt eine weitere Stunde nach, wobei sich der Ansatz auf 40 ° C erwärmt. Anschließend tropft man unter Kühlung bei 30 °C 159,9 g (1,58 Mol)

Triethylamin innerhalb von 2 h zu und rührt noch weitere 2 h nach. Nach Abfiltrieren von ausgefallenen Hydrochlorid wird das Lösungsmittel abgezogen, der Rückstand gut mit Ethanol gewaschen und im Vakuum getrocknet.
Ausbeute: 482 g (95 % der Theorie),
Fp.: 94 - 95 °C (farblose Kristalle)

| Elementaranalyse: $C_{13}H_{10}N_2O_7S$: 338,30 | | | |
|---|---|---|---|
| Ber.: | C: 46,16 % | H: 2,98 % | N: 8,28 % |
| Gef.: | C: 46,00 % | H: 3,00 % | N: 8,20 % |

c) Herstellung von 2,6-Diaminotoluol-4-sulfonsäurephenylester

900 g (2,66 Mol) 2,6-Dinitrotoluol-4-sulfonsäurephenylester gelöst in 4,5 l Methanol werden bei 40 bar und einer maximalen Innentemperatur von 53 °C an 100 g (11 %) Raney-Nickel hydriert. Nach beendeter Wasserstoffaufnahme wird der Katalysator bei 50 °C abgetrennt und das Lösungsmittel abgezogen. Der zurückbleibende breiige Rückstand wird zweimal mit kaltem Methanol gewaschen, abgesaugt und im Vakuum getrocknet.
Ausbeute: 600 g (81 % der Theorie),
Fp.: 133 °C (fast farblose Kristalle)

| Elementaranalyse: $C_{13}H_{14}N_2O_3S$: 278,33 | | | |
|---|---|---|---|
| Ber.: | C: 56,10 % | H: 5,07 % | N: 10,06 % |
| Gef.: | C: 56,10 % | H: 4,90 % | N: 10,10 % |

Beispiel 2

a) Herstellung von 2,6-Dinitrotoluol-4-sulfonsäure-2-isopropylphenylester

Eine Lösung von 91,6 g (0,33 mol) 2,6-Dinitrotoluol-4-sulfochlorid, 47,7 g (0,35 mol) 2-Isopropylphenol und 7,4 g Triethylbenzylammoniumchlorid in 900 ml Methylenchlorid versetzt man unter Rühren bei Raumtemperatur mit 90 g (0,33 mol) 50 %iger $K_2CO_3$-Lösung und rührt weitere 2 Stunden bei dieser Temperatur. Anschließend trennt man die wäßrige Phase ab, wäscht die organische Phase zweimal mit Wasser und trocknet über $Na_2SO_4$. Nach Abziehen des Lösungsmittels wird das Rohrprodukt mit kaltem Isopropanol gewaschen und im Vakuum getrocknet.
Ausbeute: 119 g (95 % der Theorie)
Fp.: 95 - 96 °C (fast farblose Kristalle).

b) Herstellung von 2,6-Diaminotoluol-4-sulfonsäure-2′-isopropylphenylester

152 g (0,4 mol) 2,6-Dinitrotoluol-4-sulfonsäure-2′-isopropylphenylester werden analog Beispiel 1c) an 16 g Raney-Nickel in 900 ml Methanol hydriert.
Rohausbeute: 115 g (90 % der Theorie)
Fp.: 125 - 130 °C (bräunliche Kristalle)
Reinausbeute: 95 g (74 % der Theorie)
Fp.: 133 °C (fast farblose Kristalle aus i-Propanol

| Elementaranalyse: $C_{16}H_{20}N_2O_3S$: 320,41 | | | |
|---|---|---|---|
| Ber.: | C: 59,98 % | H: 6,29 % | N: 8,74 % |
| Gef.: | C: 60,10 % | H: 6,10 % | N: 8,80 % |

Beispiel 3

a) Herstellung von 2,6-Dinitrotoluol-4-sulfonsäure-p-kresylester

182,3 g (0,65 mol) 2,6-Dinitrotoluol-4-sulfonsäurechlorid, 73,6 g (0,68 mol) p-Kresol, 180 g (0,65 mol) 50 %ige $K_2CO_3$-Lösung und 14,8 g Triethylbenzylammoniumchlorid werden analog Beispiel 2a) in 1800 ml Methylenchlorid umgesetzt.
Rohausbeute: 215 g (94 % der Theorie)
Fp.: 114 - 118 °C (bräunliche Kristalle)
Reinausbeute: 165 g (72 % der Theorie)
Fp.: 120 - 122 °C (fast farblose Kristalle aus i-Propanol)

b) Herstellung von 2,6-Diaminotoluol-4-sulfonsäure-p-kresylester

140,8 g (0,4 mol) 2,6-Dinitrotoluol-4-sulfonsäure-p-kresylester werden analog Beispiel 1c) an 14 g Raney-Nickel in 850 ml Methanol hydriert.
Rohausbeute: 113 g (97 % der Theorie)
Fp.: 149 - 153 °C (braune Kristalle)
Reinausbeute: 89 g (77 % der Theorie)
Fp.: 154 - 156 °C (hellbraune Kristalle aus i-Propanol)

| Elementaranalyse: $C_{14}H_{16}N_2O_3S$: 292,36 | | | |
|---|---|---|---|
| Ber.: | C: 57,52 % | H: 5,52 % | N: 9,58 % |
| Gef.: | C: 57,70 % | H: 5,40 % | N: 9,60 % |

Beispiel 4

a) Herstellung von 2,6-Dinitrotoluol-4-sulfonsäure-m-kresylester

182,3 g (0,65 mol) 2,6-Dinitrotoluol-4-sulfonsäurechlorid, 73,6 g (0,68 mol) m-Kresol, 180 g (0,65 mol) 50 %ige $K_2CO_3$-Lösung und 14,8 g Triethylbenzylammoniumchlorid werden analog Beispiel 2a) in 1800 ml Methylenchlorid umgesetzt.
Rohausbeute: 210 g (92 % der Theorie)
Fp.: 90 - 94 °C (bräunliche Kristalle)
Reinausbeute: 163 g (71 % der Theorie)
Fp.: 94 - 95 °C (fast farblose Kristalle aus i-Propanol)

b) Herstellung von 2,6-Diaminotoluol-4-sulfonsäure-m-kresylester

151,4 g (0,43 mol) 2,6-Dinitrotoluol-4-sulfonsäure-m-kresylester werden analog Beispiel 1c) an 15 g Raney-Nickel in 900 g Methanol hydriert.
Rohausbeute: 125 g (quantitativ)
Fp.: 130 - 136 °C (braune Kristalle)
Reinausbeute: 89 g (71 % der Theorie)
Fp.: 137 - 139 °C (hellbraune Kristalle aus Toluol)

| Elementaranalyse: $C_{14}H_{16}N_2O_3S$: 292,36 | | | |
|---|---|---|---|
| Ber.: | C: 57,52 % | H: 5,52 % | N: 9,58 % |
| Gef.: | C: 57,60 % | H: 5,30 % | N: 9,40 % |

Beispiel 5

a) Herstellung von 2,6-Dinitrotoluol-4-sulfonsäure-2′-ethylphenylester

182,3 g (0,65 mol) 2,6-Dinitrotoluol-4-sulfonsäurechlorid, 83 g (0,68 mol) 2-Ethylphenol, 180 g (0,65 mol) 50 %ige $K_2CO_3$-Lösung und 14,8 g Triethylbenzylammoniumchlorid werden analog Beispiel 2a) in 1800 ml Methylenchlorid umgesetzt.
Rohausbeute: 231 g (97 % der Theorie)
Fp.: 81 - 85 °C (bräunliche Kristalle)
Reinausbeute: 194 g (81 % der Theorie)
Fp.: 87 - 88 °C (fast farblose Kristalle aus i-Propanol)

b) Herstellung von 2,6-Dinitrotoluol-4-sulfonsäure-2′-ethylphenylester

410 g (1,12 mol) 2,6-Dinitrotoluol-4-sulfonsäure-2′-ethylphenylester werden analog Beispiel 1c) an 50 g Raney-Nickel in 2100 ml Methanol hydriert.
Rohausbeute: 328 g (96 % der Theorie)
Fp.: 95 - 98 °C (bräunliche Kristalle)
Reinausbeute: 280 g (82 % der Theorie)
Fp.: 98 - 100 °C (hellbraune Kristall aus i-Propanol)

| Elementaranalyse: $C_{15}H_{18}N_2O_3S$: 306,39 | | | |
|---|---|---|---|
| Ber.:<br>Gef.: | C: 58,80 %<br>C: 58,90 % | H: 5,92 %<br>H: 5,80 % | N: 9,14 %<br>N: 9,00 % |

Beispiel 6

a) Herstellung von 3,5-Dinitro-4-chlorbenzolsulfonsäurechlorid

760 g (2 mol) 3,5-Dinitro-4-chlorbenzolsulfonsäurekaliumsalz (ca. 85 %ig) und 614 g (4 mol) Phosphoroxychlorid werden analog Beispiel 1a) in 800 ml Acetonitril und 800 ml Tetramethylensulfon umgesetzt.
Ausbeute: 550 g (91 % der Theorie)
Fp.: 89 - 91 °C (hellbeige Kristalle)

| Elementaranalyse: $C_6H_2Cl_2N_2O_6S$: 301,06 | | | | |
|---|---|---|---|---|
| Ber.:<br>Gef.: | C: 23,94 %<br>C: 24,2 % | H: 0,67 %<br>H: 0,9 % | Cl: 23,55 %<br>Cl: 23,2 % | N: 9,30 %<br>N: 9,3 % |

b) Herstellung von 3,5-Dinitro-4-chlorbenzolsulfonsäure-2′-methoxyphenylester

195,7 g (0,65 mol) 3,5-Dinitro-4-chlorbenzolsulfonsäurechlorid, 84,4 g (0,68 mol) 2-Methoxyphenol, 180 g (0,65 mol) 50 %ige $K_2CO_3$-Lösung und 14,8 g Triethylbenzylammoniumchlorid werden analog Beispiel 2a) umgesetzt.
Rohausbeute: 206 g (82 % der Theorie)
Fp.: 143-147 °C (bräunliche Kristalle)
Reinausbeute: 147 g (58 % der Theorie)
Fp.: 151-152 °C (hellgelbe Kristalle aus Ethylenglykolmonomethyletheracetat)

c) Herstellung von 3,5-Diamino-4-chlorbenzolsulfonsäure-2′-methoxyphenylester

155,5 g (0,4 mol) 3,5-Dinitro-4-chlorbenzolsulfonsäure-2′-methoxyphenylester werden analog Beispiel 1c) an 16 g Raney-Nickel in 900 ml Methanol hydriert.
Rohausbeute: 122 g (93 % der Theorie)

Fp.: 135-141 °C (braune Kristalle)
Reinausbeute: 84 g (64 % der Theorie)
Fp.: 143-145 °C (hellbraune Kristalle aus Toluol)

| Elementaranalyse: $C_{13}H_{13}ClN_2O_4S$: 328,78 | | | |
|---|---|---|---|
| Ber.: | C: 47,49 % | H: 3,99 % | N: 8,52 % |
| Gef.: | C: 50,2 % | H: 4,3 % | N: 8,3 % |

Anwendungsbeispiele:

Beispiel I

2000 g eines aus Adipinsäure und Ethylenglykol erhaltenen Polyesters (MG = 2000, OHZ = 56) werden mit 360 g 2,4-Diisocyanatotoluol auf 70 - 80 °C erwärmt und bis zu einem NCO-Gehalt von 3,8 - 3,9 % bei dieser Temperatur gehalten. 500 g des Prepolymeren werden bei 80 °C kurz im Vakuum entgast und innerhalb von 30 Sekunden mit 71 g geschmolzenem, 2,6-Diaminotoluol-4-sulfonsäurephenylester (Fp.: 133 °C) vermischt.

Der Reaktionsansatz wird in eine auf 100 °C erwärmte Form gegossen, wobei die Gießzeit etwa 3 bis 5 Minuten beträgt. Nach 15 Minuten wird der Probenkörper entformt und anschließend noch 24 Stunden bei 120 °C getempert. Die mechanischen Eigenschaften des so erhaltenen Polyurethanelastomeren sind in Tabelle 1 angegeben.

Beispiel II

500 g des in Beispiel I beschriebenen NCO-Prepolymeren vom NCO-Gehalt 3,9 % werden in der dort angegebenen Weise mit 78,1 g 2,6-Diaminotoluol-4-sulfonsäure-2'-ethylphenylester (Fp.: 98 - 100 °C) vermischt und weiterverarbeitet. Die mechanischen Eigenschaften des so erhaltenen Polyurethanelastomeren sind in Tabelle 1 angegeben.

Tabelle 1

| | Beispiel I | Beispiel II |
|---|---|---|
| Härte Shore A | 78 | 78 |
| Modul (100 %) MPa | 3,7 | 4,1 |
| Zugfestigkeit MPa | 37,5 | 40,5 |
| Bruchdehnung % | 650 | 600 |
| Weiterreißfestigkeit KN/m | 53,3 | 44,5 |
| Elastizität % | 21 | 20 |

## Patentansprüche

**1.** Sulfonsäurearylesterhaltige aromatische Diamine der Formel

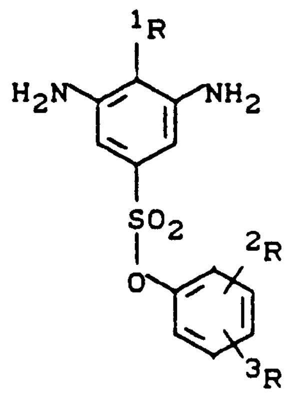

,

in der

$^{1}R$ ein Wasserstoffatom, einen gegebenenfalls verzweigten Alkylrest mit 1 bis 6 C-Atomen, vorzugsweise eine Methylgruppe, einen Alkoxyrest mit 1 bis 6 C-Atomen oder ein Halogenatom,

$^{2}R$ und $^{3}R$ gleich oder verschieden sind, Wasserstoffatome, gegebenenfalls verzweigte Alkylreste mit 1 bis 20 C-Atomen, Alkoxyreste mit 1 bis 6 C-Atomen oder ein Halogenatom bedeuten.

**2.** Diamine nach Anspruch 1, dadurch gekennzeichnet, daß $^{1}R$ einen Alkylrest von 1 bis 6 C-Atomen bedeutet.

**3.** Diamine nach Anspruch 1, dadurch gekennzeichnet, daß $^{1}R$ eine Methylgruppe oder Chlor bedeutet.

**4.** Diamine nach Anspruch 1 bis 3, dadurch gekennzeichnet, daß $^{2}R$ und $^{3}R$ gleich oder verschieden sind und gegebenenfalls verzweigte Alkylreste mit 1 bis 6 C-Atomen bedeuten.

**5.** Diamine nach Anspruch 1 bis 3, dadurch gekennzeichnet, daß $^{2}R$ Wasserstoff bedeutet.

**6.** Diamine nach Anspruch 5, dadurch gekennzeichnet, daß $^{3}R$ einen Alkoxyrest mit 1 bis 6-C-Atomen bedeutet.

**7.** Diamine nach Anspruch 5, dadurch gekennzeichnet, daß $^{3}R$ einen gegebenenfalls verzweigten Alkylrest mit 1 bis 6 C-Atomen bedeutet.

**8.** Diamine nach Anspruch 5, dadurch gekennzeichnet, daß $^{3}R$ Wasserstoff, einen Methylrest oder einen Ethylrest bedeutet.

**9.** Verfahren zur Herstellung von Diaminen nach Ansprch 1 bis 8, dadurch gekennzeichnet, daß man

a) aromatische Sulfochloride der allgemeinen Formel

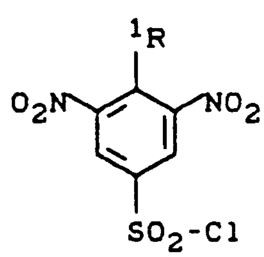

mit Phenolen der allgemeinen Formel

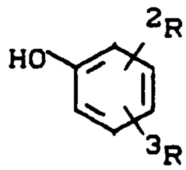

in Gegenwart von alkalisch reagierenden Verbindungen umsetzt und
b) die so erhaltenen Dinitrosulfonsäureester der allgemeinen Formel

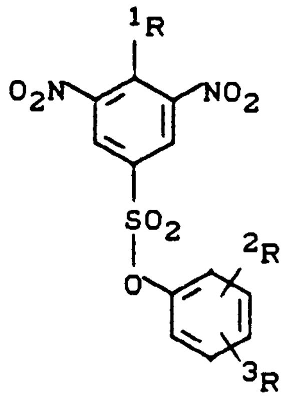

in an sich bekannter Weise zu den entsprechenden Diaminen hydriert, wobei $^1R$, $^2R$ und $^3R$ die in den Ansprüchen 1 bis 8 angegebene Bedeutung haben.

**10.** Verwendung der aromatischen Diamine gemäß Anspruch 1 bis 8 als Aufbaukomponente bei der Herstellung von gegebenenfalls zelligen Polyurethankunststoffen nach dem Isocyanat-Polyadditionsverfahren.

## Claims

**1.** Aromatic diamines containing sulfonic acid aryl esters and corresponding to the following general formula

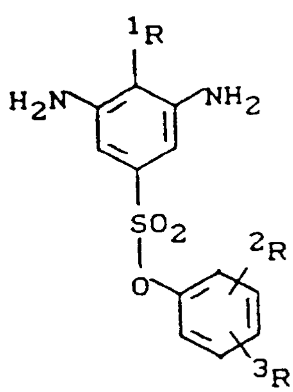

in which

$^1R$ is a hydrogen atom, an optionally branched $C_{1-6}$ alkyl radical, preferably a methyl group, a $C_{1-6}$ alkoxy radical or a halogen atom,

$^2R$ and $^3R$ may be the same or different and represent hydrogen atoms, optionally branched $C_{1-20}$ alkyl radicals, $C_{1-6}$ alkoxy radicals or a halogen atom.

2. Diamines as claimed in claim 1, characterized in that $^1R$ is a $C_{1-6}$ alkyl radical.

3. Diamines as claimed in claim 1, characterized in that $^1R$ is a methyl group or chlorine.

4. Diamines as claimed in claims 1 to 3, characterized in that $^2R$ and $^3R$ may be the same or different and represent optionally branched $C_{1-6}$ alkyl radicals.

5. Diamines as claimed in claims 1 to 3, characterized in that $^2R$ is hydrogen.

6. Diamines as claimed in claim 5, characterized in that $^3R$ is a $C_{1-6}$ alkoxy radical.

7. Diamines as claimed in claim 5, characterized in that $^3R$ is an optionally branched $C_{1-6}$ alkyl radical.

8. Diamines as claimed in claim 5, characterized in that $^3R$ is hydrogen, a methyl radical or an ethyl radical.

9. A process for the production of the diamines claimed in claims 1 to 8, characterized in that
a) aromatic sulfochlorides corresponding to the following general formula

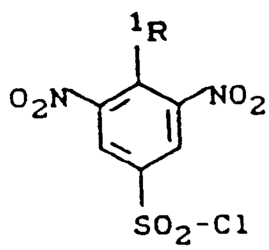

are reacted with phenols corresponding to the following general formula

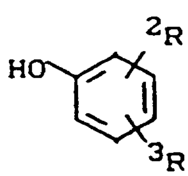

in the presence of alkaline-reacting compounds and

b) the dinitrosulfonic acid esters thus obtained which correspond to the following general formula

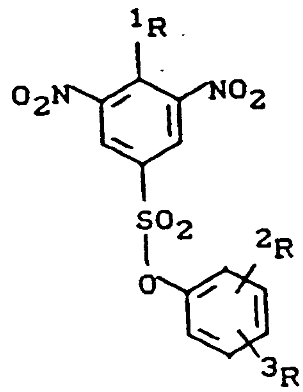

are hydrogenated in known manner to form the corresponding diamines, $^1R$, $^2R$ and $^3R$ in the above formulae having the meanings defined in claims 1 to 8.

**10.** The use of the aromatic diamines claimed in claims 1 to 8 as a synthesis component in the production of optionally cellular polyurethane plastics by the isocyanate polyaddition process.

**Revendications**

**1.** Diamines aromatiques contenant des esters aryliques d'acide sulfonique, répondant à la formule :

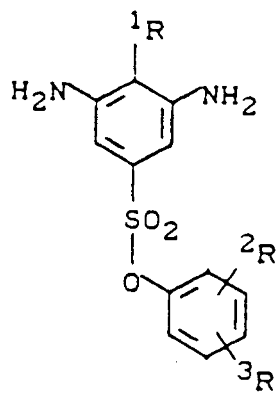

dans laquelle

$^1R$ représente un atome d'hydrogène, un radical alkyle éventuellement ramifié contenant de 1 à 6 atomes de carbone, de préférence un groupe méthyle, un radical alcoxy contenant de 1 à 6 atomes de carbone ou encore un atome d'halogène,

$^2R$ et $^3R$ sont identiques ou différents et représentent des atomes d'hydrogène, des radicaux alkyle éventuellement ramifiés contenant de 1 à 20 atomes de carbone, des radicaux alcoxy contenant de 1 à 6 atomes de carbone ou encore un atome d'halogène.

**2.** Diamines selon la revendication 1, caractérisées en ce que $^1R$ représente un radical alkyle contenant de 1 à 6 atomes de carbone.

**3.** Diamines selon la revendication 1, caractérisées en ce que $^1R$ représente un groupe méthyle ou un atome de chlore.

**4.** Diamines selon les revendications 1 à 3, caractérisées en ce que $^2R$ et $^3R$ sont identiques ou différents et représentent des radicaux alkyle éventuellement ramifiés contenant de 1 à 6 atomes de carbone.

**5.** Diamines selon les revendications 1 à 3, caractérisées en ce que $^2R$ représente un atome d'hydrogène.

**6.** Diamines selon la revendication 5, caractérisées en ce que $^3R$ représente un radical alcoxy contenant de 1 à 6 atomes de carbone.

**7.** Diamines selon la revendication 5, caractérisées en ce que $^3R$ représente un radical alkyle éventuellement ramifié contenant de 1 à 6 atomes de carbone.

**8.** Diamines selon la revendication 5, caractérisées en ce que $^3R$ représente un atome d'hydrogène, un radical méthyle ou un radical éthyle.

**9.** Procédé pour la préparation de diamines selon les revendications 1 à 8, caractérisé en ce qu'on fait réagir :

a) des sulfochlorures aromatiques répondant à la formule générale

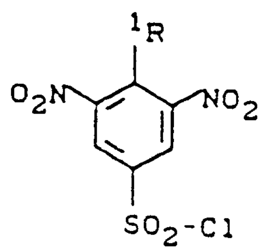

avec des phénols répondant à la formule générale

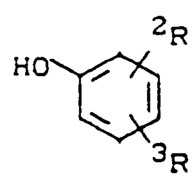

en présence de composés à réaction alcaline, et

b) on soumet à une hydrogénation, d'une manière connue en soi, les esters de l'acide dinitrosulfonique ainsi obtenus répondant à la formule générale

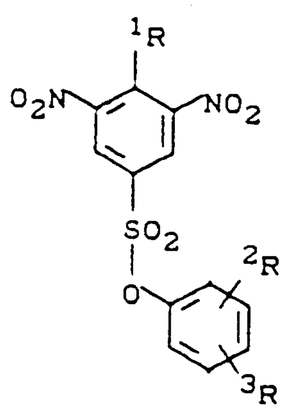

pour obtenir les diamines correspondantes, dans lesquelles $^1R$, $^2R$ et $^3R$ ont la signification indiquée dans les revendications 1 à 8.

**10.** Utilisation des diamines aromatiques selon les revendications 1 à 8, comme composant d'édification lors de la préparation de matières synthétiques en polyuréthanne éventuellement alvéolaires, d'après le procédé de polyaddition d'isocyanates.